# EUROPÄISCHE PATENTANMELDUNG

(11) **EP 1 621 891 A1**
(43) Veröffentlichungstag der Anmeldung: **01.02.2006**
(21) Anmeldenummer: 05106485.5
(22) Anmeldetag: 14.07.2005
(51) Int. Cl.: G01P 15/08, G01P 3/49, G01P 15/00

(54) **Vorrichtung zur Messung von Beschleunigungen**

(30) Priorität: 28.07.2004 CH 12692004
(71) Anmelder: Alstom Technology Ltd, 5400 Baden (CH)
(72) Erfinder: Arend, Peter, 79718, Rheinfelden (DE); Ziegler, Alfred, 5408, Ennetbaden (CH)

(57) **Zusammenfassung**

Die vorliegende Erfindung betrifft eine Vorrichtung sowie ein Verfahren zur Messung von Beschleunigungen. Dabei werden in Folge eines mit wenigstens zwei Erregermagneten (1, 2) erzeugten Erregerfeldes (5, 6, B_{E}) in einem relativ zur Vorrichtung beschleunigten, elektrisch leitenden Element (4) über einen Luftspalt (17) Wirbelströme (I) induziert, und durch diese Wirbelströme induzierter Messfluss (16, Φ_{Mess}) über die dadurch in wenigstens einer Messspule (10) induzierte Spannung (U_{Mess}) erfasst, wobei sowohl die Erregermagnete (1, 2) als auch die Messspule (10) ausschliesslich auf einer Seite des elektrisch leitenden Elements (4) angeordnet sind. Dabei wird eine lückenlose Felderregung bei hoher Luftspaltinduktion dadurch bewirkt, dass die Nord-Süd Richtung der Erregermagnete (1, 2) jeweils im wesentlichen parallel zur Oberfläche des elektrisch leitenden Elementes (4) angeordnet ist.

## Beschreibung

### TECHNISCHES GEBIET

Die vorliegende Erfindung betrifft eine Vorrichtung zur Messung von Beschleunigungen, bei welcher in Folge eines mit wenigstens zwei Erregermagneten erzeugten Erregerfeldes in einem relativ zur Vorrichtung beschleunigten, elektrisch leitenden Element über einen Luftspalt Wirbelströme induziert werden, und durch diese Wirbelströme induzierter Messfluss über die dadurch in wenigstens einer Messspule induzierte Spannung erfasst wird, wobei sowohl die Erregermagnete als auch die Messspule ausschliesslich auf einer Seite des elektrisch leitenden Elements angeordnet sind. Ausserdem betrifft die Erfindung ein Verfahren zur Verwendung der genannten Vorrichtung.

### STAND DER TECHNIK

Zur Bestimmung von Eigen- oder Betriebsschwingungen rotierender Wellen werden üblicherweise die Beschleunigungen mittels Linear-Beschleunigungsaufnehmern gemessen. Hierbei entsteht ein recht grosser Aufwand, denn auf dem Rotor werden Linear-Beschleunigungsaufnehmer diametral gegenüber angebracht, deren Ausgangssignale elektronisch addiert und verstärkt werden und mittels Telemetriesystem per Funk zum ruhenden Beobachter übertragen werden. Für die Linear-Beschleunigungsaufnehmer und die Elektronik müssen für jeden Rotor passende Halterungen konstruiert und angebracht werden, die einerseits gegen die Fliehkräfte bestehen können und andererseits auch steif genug für die Übertragung der Schwingung sein müssen (Eigenfrequenz der Halterung mit Aufnehmer » Messfrequenz).

Das vorliegende Dokument betrifft eine alternative Messmethode, nämlich die Verwendung eines Ferraris-Drehbeschleunigungsaufnehmers.

Die Funktionsweise des Ferraris-Messprinzips sei anhand der so genannten Glockenläufer-Variante erklärt (vgl. dazu z.B. den Artikel "Aufnehmer zur Messung schnell veränderlicher Drehbeschleunigungen und Drehmomente" von A. Denne, H. Rausch und W. Freise, Technisches Messen 48, Jahrgang 1981, Heft 10, S. 339-342). Der Stator des Aufnehmers besteht dabei aus einem Innen- und Aussenstator, die zusammen ein mehrpoliges, radiales Magnetfeld erzeugen. Der Aufnehmer erzeugt ein zweipoliges Feld mittels zwei symmetrisch angeordneter elektrischer Magnete. Das Magnetfeld durchdringt ein Reaktionsteil, das als unmagnetische, aber elektrisch leitfähige Glocke ausgeführt sein kann (Material: Messing, Bronze oder Aluminium). Bei Drehung der Glocke entstehen an den Orten des Magnetfeldes (unter den elektrischen Magneten) axiale Ströme, deren Vorzeichen durch die Richtung des Radialfeldes vorgegeben ist. Entsprechend der Anzahl von Magnetpolen wechselt die Richtung des axialen Stromes in der Glocke; es entstehen Wirbelströme, die sich an den Stirnseiten der Glocke schliessen und ihrerseits ein Sekundärfeld (Messfluss) erregen. Dieses Sekundärfeld kann sich über einen magnetischen Messkreis schliessen und durchsetzt dabei die Messwicklungen. Die zeitliche Änderung des "Messflusses" produziert eine induzierte Spannung in diesen Messwicklungen. Das Spannungssignal wird einem Messverstärker mit sehr hohem Eingangswiderstand zugeführt.

Die Ströme in der Glocke und damit auch der Messfluss sind proportional zur Geschwindigkeit, mit der das leitfähige Glockenmaterial vom magnetischen Feld geschnitten wird. Bei einer Änderung der Glocken-Drehgeschwindigkeit ändert sich die Wirbelstromstärke und damit auch der Messfluss und an der Messwicklung wird eine Spannung messbar, die proportional zur momentanen Drehbeschleunigung ist. Die Drehbeschleunigung wird also direkt ohne irgendwelche elektronische Zwischenverarbeitung auf ein Spannungssignal abgebildet. Weil das Drehbeschleunigungs-Signal in der ruhenden Messwicklung erzeugt wird, ist kein Telemetriesystem notwendig.

Die Bauformen mit Glockenläufer variieren bezüglich der Polpaarzahl, des Glockenmaterials und der Anregung des Magnetfeldes. Ursprünglich wurde elektrische Erregung im Innenstator bevorzugt, später Erregung im Aussenstator, dann Permanenterregung im Aussenstator, im Innenstator und auch beides zusammen.

Grundsätzlich besteht bei allen elektrodynamisch arbeitenden Beschleunigungssensoren das konstruktive Problem, den magnetischen Erregerkreis (welcher den Erreger-Gleichfluss führen muss) und den magnetischen Messkreis (welcher den Mess-Wechselfluss führen muss) so auszubilden, dass sich die Erregermagnete (ob elektrisch oder permanent) und die Messwicklungen räumlich getrennt anordnen lassen. Durch das Wirkungsprinzip bedingt durchdringt der Messfluss das leitende Medium stets zwischen den Erregermagneten.

Um sowohl den räumlichen Versatz zwischen Erregung und Messwicklung als auch die überlappenden Felderregungen zu realisieren, ist es üblich die Sensoren so zu gestalten, dass Erregerkreis und Messkreis auf beiden Seiten des Mediums (also auf der Innen- und Aussenseite der Glocke) angeordnet sind, (oder umgekehrt). Eine solche "zweiseitige" Anordnung ist auch die Scheibenläufer-Variante (mit gleichem Messprinzip) bekannt, die in WO 01/61363 beschrieben ist.

Dagegen beschreibt die WO 02/12904 einen einseitigen Beschleunigungssensor. Dieser Sensor hat den Vorteil einer kompakten Bauweise, es ergeben sich aber damit verbunden auch einige Nachteile:

Die kleine Ausdehnung der Magnete in Richtung der Medium-Geschwindigkeit führt zu einer sehr lokalen Wirkung des Sensors und somit können OberflächenUngenauigkeiten (zum Beispiel Riefen) zu ungewollten Störsignalen führen. Insbesondere bei harmonischen Analysen (z.B. unter Verwendung von Fouriertransformationen) des Beschleunigungssignals kann dies zu falschen Beurteilungen führen, denn die Frequenzen dieser Störsignale entsprechen der Drehfrequenz bzw. dem Vielfachen der Drehfrequenz. Die interessierenden Frequenzen, die detektiert werden sollen, und die Störfrequenzen fallen somit zusammen. Eine Ausführung mit breiteren Erregermagneten (oder mehreren nebeneinander angeordneten Magneten) könnte zwar diesbezüglich Abhilfe schaffen, doch ist dabei das schlechte Verhältnis von Feldlücke und Feldlänge zu beachten. Deshalb muss man die Anordnung bei breiteren Dauermagneten auch länger ausführen, um durch die Lükken aufweisende Felderregung keine starken Empfindlichkeitseinbussen hinzunehmen. Damit entstünde ein sehr grossflächiger Sensor.

Die Spulen müssen bei einer derartigen Bauweise kompakt ausgeführt werden, denn eine Spulenseite grenzt direkt an einen Dauermagnet. Die parasitären Kapazitäten (Windung-Windung und Windung-Eisen) führen zusammen mit den Selbstinduktivitäten (einzelner Windungen bzw. mehrerer Windungen) zu einer Eigenschwingungsfähigkeit. So können im Fourierspektrum des Ausgangssignals Frequenzanteile vorhanden sein, die nicht mit der Beschleunigung des Mediums zusammenhängen, sondern durch die Bauart des Sensors bedingt sind. Durch die Bauart bedingt nimmt der Anteil des Erregerfeldes, der das Medium durchsetzt, mit der Luftspaltweite stark ab. Für Anwendungen mit grosser Luftspaltweite, die bei umlaufender Exzentrizität der Welle sinnvoll sind, ist dieser Sensor deshalb nicht gut geeignet. Für Wellen mit umlaufender Exzentrizität ist es sinnvoll, die Luftspaltweite relativ gross zu wählen, damit der Erregerfluss möglichst konstant ist. Andernfalls erhält man im Fourierspektrum des Ausgangssignals eine drehzahlfrequente Störgrösse.

### DARSTELLUNG DER ERFINDUNG

Der Erfindung liegt die Aufgabe zugrunde, eine alternative Vorrichtung zur Messung von Beschleunigungen unter Verwendung des Ferraris-Prinzips zur Verfügung zu stellen. Dabei soll die Erregung lückenlos sein, und das bewegte Element von einer einzigen Seite zugleich erregt und gemessen werden, sodass die Anwendung an rotierenden Wellen möglich ist. Es handelt sich mit anderen Worten um eine alternative Vorrichtung zur Messung von Beschleunigungen, bei welcher in Folge eines mit wenigstens zwei Erregermagneten erzeugten Erregerfeldes in einem relativ zur Vorrichtung beschleunigten, elektrisch leitenden Element über einen Luftspalt Wirbelströme induziert werden, und durch diese Wirbelströme induzierter Messfluss über die dadurch in wenigstens einer Messspule induzierte Spannung erfasst wird, wobei sowohl die Erregermagnete als auch die Messspule ausschliesslich auf einer Seite des elektrisch leitenden Elements angeordnet sind.

Die Lösung dieser Aufgabe wird dadurch erreicht, dass die Nord-Süd Richtung der Erregermagnete jeweils im wesentlichen parallel zur Oberfläche des elektrisch leitenden Elementes angeordnet ist.

Die Anordnung unterscheidet sich von Anordnungen nach dem Stand der Technik insofern, als sie insbesondere für Fourieranalysen der Drehbeschleunigungen von grossen Wellen wesentliche Vorteile bietet: Sie erlaubt grössere Luftspaltweite bei endlich guter Sensorempfindlichkeit (kleiner Einfluss von umlaufender Wellen-exzentrizität) und relativ grosse Pole (kleinerer Einfluss von Inhomogenitäten des Mediums) sowie grossräumig ausgeführten Messspulen (Verminderung der parasitären Kapazitäten und damit Verhinderung tiefer Eigenfrequenzen).

Für die Stärke dieses Messflusses ist es von besonderem Vorteil, wenn sich die Querschnittsflächen des Gleich-Erregerflusses und die des Wechsel-Messflusses überlappen, denn dann ist gewährleistet, dass sich die in der Glocke induzierten Wirbelströme sowohl im Nord- als auch Südpol schneiden und sich im Wirbelzentrum der Messfluss ausbilden kann. Bezüglich des auftretenden Bremsmomentes und der produzierten Wärme in der Glocke ist dies optimal, weil der Wirbelstrom in seiner Gesamtheit zu Anregung des Messflusses beiträgt. Im Gegensatz zu dieser "lückenlosen" Feldanregung tragen bei der Anordnung mit einem Lücken aufweisenden Erregerfeld nach dem Stand der Technik weniger Wirbelströme zum Messfluss bei und die Sensorempfindlichkeit ist kleiner. Das Verhältnis von Erregerfeldlücke (gemessen auf der Oberfläche des Mediums in Geschwindigkeitsrichtung) zu Erregerfeldlänge (gemessen auf der Oberfläche des Mediums orthogonal zur Geschwindigkeit) ist ein geeigneter Massstab zur Bewertung der Empfindlichkeitsminderung.

Wird die Nord-Süd-Richtung der Erregermagnete jeweils im wesentlichen parallel zur Oberfläche des elektrisch leitenden Elementes angeordnet, ist es möglich, die am Luftspalt wirksamen Polkonturen unabhängig von den Dimensionen der Erregermagnete zu gestalten. Dies hat zwei wesentliche Vorteile: Zum einen kann man das Verhältnis zwischen Fluss-Querschnittsfläche am Ort des Erregermagnetes und am Luftspalt wirksamer Poloberfläche gross wählen, sodass eine Flusskonzentrator-Anordnung entsteht. Damit lässt sich trotz grösseren Luftspaltes eine relativ hohe Luftspaltinduktion erreichen. Dies hat den Vorteil, dass eine gegebenenfalls vorhandene umlaufende Wellen-Exzentrizität einen kleineren Einfluss auf das Messsignal hat. Zum anderen lässt sich die Polkontur so gestalten, dass der Erregerfluss über grössere Gebiete des Mediums nahezu konstant verläuft und der Flussanteil, der sich parallel zum Medium schliesst ohne dieses zu durchdringen, minimiert werden kann. Dies hat folgende Vorteile: Oberflächenungenauigkeiten (wie Riefen) haben durch die grössere Ausdehnung der Polflächen in Richtung der Geschwindigkeit des Mediums einen kleineren Einfluss. Die Wirbelstromverluste sind relativ klein und, wie bereits erwähnt, der Bremseffekt sinkt. Der Streufluss ist minimal und belastet deshalb den magnetischen Erregerkreis nicht (Sättigungseffekte).

Zur Lösung der oben beschriebenen Aufgabe ist es vorteilhaft, zwei solcher Erregereinrichtungen zu verwenden, die mit entgegengesetzter magnetischer Polung über ein Joch in axialer Richtung verbunden sind. Die Bleche dieses Joches wie auch die der beiden Erregereinrichtungen liegen bezüglich der drehenden Welle in der Radial-Axial-Ebene. Zur Funktion des Aufnehmers ist es vorteilhaft, dass Kompensationsmagnete den magnetischen Kurzschluss über das Joch vermeiden. Der axiale Abstand und die radiale Höhe der beiden Erregereinrichtungen lässt sich gross genug wählen, sodass Formspulen mit Abstand zum Eisen eingesetzt werden können. Die Wicklungsdichte kann niedrig gewählt sein, um die Windung-Windung-Kapazitäten klein zu halten. Beides hat den Vorteil, dass parasitäre Kapazitäten der Messwicklung klein gehalten werden können und damit die Eigenfrequenzen der Messspule sehr hoch liegen.

Die Drehschwingungsmessung mit einem derartigen Ferraris-Sensor im Zusammenhang mit der Messung an einem Schaft eines Rotors weist im Vergleich zur konventionellen Messmethode (d.h. Messung mit rotierenden Linearaufnehmern und Telemetriesystem) folgende Vorteile auf:
- Es sind keine speziellen Sensor-Halterungen zu entwerfen bzw. zu montieren.
- Die Messung ist an allen Rotor-Positionen möglich, die eine glatte Eisenoberfläche bieten (z.B. Welle, Flansche etc.).
- Universell für alle Rotoren verwendbar (Sensorempfindlichkeit hängt nur im geringen Mass vom Durchmesser des Rotors ab).
- Sehr einfache Handhabung, sehr schnell vom Bedienpersonal erlernbar. Lediglich der Aufnehmer-Stator ist in einem Nennabstand vom rotierenden Teil zu montieren und gegen die angreifenden radialen Magnetkräfte zu fixieren.

Gegenüber der Beschleunigungsmessung mit dem Aufnehmer, der im Stand der Technik in der WO 02/12904 beschrieben ist, weist der hier beschriebene Sensor folgende Vorteile auf:
- Die Luftspaltweite kann bei ähnlicher Sensor-Empfindlichkeit relativ zur umlaufenden Rotor-Exzentrizität gross gewählt werden, sodass das diesbezügliche Störsignal minimiert werden kann. Dies hat insbesondere im Hinblick auf die Auswertung von Drehschwingungs-Harmonischen wesentliche Vorteile.
- Der räumliche Verlauf der Luftspaltinduktion in Richtung der Rotorgeschwindigkeit lässt sich bedingt durch die spezielle Art der Felderregung derart optimieren, dass sich ein breites Induktionsmaximum ausbildet. Dies hat die Vorteile des kleineren Bremsmomentes (auch kleinere Reaktionskraft auf den Stator des Sensors) und der kleineren Wirbelstromverluste.
- Die Bauart des Sensors ermöglicht viel Raum für die Messspule, wodurch diese bezüglich ihres Abstandes zum Eisen und bezüglich ihrer Wicklung so optimiert werden kann, dass kleinere parasitäre Kapazitäten wirksam werden. Somit kann erreicht werden, dass die Eigenfrequenzen, die durch das Zusammenwirken von Spulen-Kapazitäten und -Induktivitäten entsteht, sehr hoch sind.

Eine bevorzugte Ausführungsform der vorliegenden Erfindung zeichnet sich dadurch aus, dass die Erregermagnete als Permanentmagnete ausgebildet sind. Diese Bauweise ist besonders einfach und zuverlässig. Als Permanentmagnet gekommen insbesondere Neodym-basierende Magnete in Frage, die sehr hohe Remanenzinduktionen aufweisen.

Eine weitere bevorzugte Ausführungsform ist dadurch gekennzeichnet, dass die Erregermagnete mit ihrer Nord-Süd Richtung im wesentlichen tangential zum Rotor angeordnet und in radialer Richtung magnetisch parallel geschaltet sind. Die Erregermagnete grenzen nord- und südseitig an Blechpakete und durchdringen diese mit ihrem magnetischen Gleichfluss zunächst orthogonal zur Blechebene und mit der Nähe zum Luftspalt zunehmend in Blechebene. Diese Blechpakete dienen einerseits zur Führung des Erregerflusses, andererseits zum Führen des Messflusses. Typischerweise werden z.B. 5 bis 10 Bleche parallel aufeinander gelegt und auf jeder Seite des Erregermagnetes direkt an diesen grenzend angeordnet.

Eine weitere bevorzugte Ausführungsform ist mit gestuften Blechpaketen ausgestattet: Um auf dem beschleunigten Element ein möglichst breites und flaches Feldmaximum zu erhalten und gleichsam den Streufluss zu vermindern, werden dabei auf der dem Luftspalt zugewandten Seite des Erregermagnetes die Blechpakete gestuft ausgebildet. Die Erregermagnete werden z.B. auf der dem Luftspalt zugewandten Seite über die Blechenden hinaus ausgebildet, wobei besonders bevorzugt nahe den Erregermagneten angeordnete Blechlagen am weitesten zurückgenommen sind und nach aussen in gestufter Weise sukzessive weiter in den Luftspalt hineinragen. Das lückenlose Erregerfeld und der hierzu überlappende Messfluss kann durch eine solche Blechstufung optimiert werden, woraus eine gute Sensorempfindlichkeit resultiert.

Wie bereits erwähnt verfügt eine bevorzugte Ausführungsform der vorliegenden Erfindung über zwei solcher Erregereinrichtungen, die mit entgegengesetzter Polung axial versetzt angeordnet sind, mit einem verbindenden Joch, das vorzugsweise geblecht ausgeführt ist. So werden zwei Erregermagnete auf ihrer dem Element abgewandten Seite über ein zur Führung des Messflusses geeignet ausgebildetes Joch verbunden, auf dem die Messspule vorzugsweise als vorgefertigte Formspule anzuordnen ist. Um einen magnetischen Kurzschluss der Erregermagnete in Folge der unterschiedlichen Polarisierung beider Erregereinrichtungen zu verhindern, sollten zwischen Joch und den beiden Blechpaketen jeweils jeder Erregereinrichtung Kompensationsmagnete angeordnet werden. Insgesamt sind also 4 solcher Kompensationsmagnete notwendig, die entsprechend dem Produkt aus Magnetdicke und Koerzitivfeldstärke die entsprechende magnetische Spannung aufzubringen vermögen. Die Kompensationsmagnete sollten dabei mit ihrer Nord-Süd Richtung im wesentlichen senkrecht zum elektrisch leitenden, beschleunigten Element und zwischen den Blechpaketen von Joch und Schenkeln angeordnet sein. Bevorzugt sollten diese Kompensationsmagnete dünn (in Nord-Südrichtung) ausgeführt sein, um den Messfluss nicht unnötigerweise zu behindern und eine hohe Sensibilität sicherzustellen. Damit die Kompensationswirkung mit den Erregermagneten bestehen bleibt, müssen diese ebenfalls dünn (in Nord-Süd-Richtung) ausgeführt sein. Der Erregerfluss über den Luftspalt ist demnach vorzugsweise durch die Dauermagnet-Flussfläche zu gewährleisten, weniger durch die Magnetdicke. Die hier vorgestellte Anordnung der Erregermagnete gestattet dies.

Um in der Messspule kleine Windung-Windung-Kapazitäten zu gewährleisten, sollten die einzelnen Lagen durch Lagen aus Pappe (oder ähnlichem) distanziert werden. Insbesondere die erste und letzte Windung sollten weit voneinander angeordnet sein. Die innere Wicklungslage sollte grossen Abstand zum Blechpaket-Eisen haben. Mit einer auf einen Spulenkörper aufgebrachten Formspule ist dies auch fertigungstechnisch gut zu realisieren.

Eine derartige Vorrichtung findet vorteilhafter Weise zur Messung von Beschleunigungen von rotierenden Elementen von elektrischen Maschinen Anwendung. So handelt es sich beim elektrisch leitenden, beschleunigten Element beispielsweise um den Schaft einer rotierenden Vorrichtung, insbesondere um den Schaft eines Generators oder einer Turbine. Die Vorrichtung ist insbesondere dazu geeignet, Spektralanalysen von Drehbeschleunigungen durchzuführen. Die besondere Eignung hierzu begründet sich einerseits mit der Flusskonzentrator-Anordnung, die hohe Luftspaltweiten realisieren lässt; umlaufende Exzentrizitäten haben hier relativ kleinen Einfluss. Andererseits kann durch die Ausbildung von breiten Erregerfeld-Maxima (in Richtung der Geschwindigkeit) die Störung durch Oberflächenungenauigkeiten minimiert werden. Beide Effekte produzieren Störsignale mit Drehzahlenfrequenz und/oder alle höheren Harmonischen.

Weitere bevorzugte Ausführungsformen der erfindungsgemässen Vorrichtung sind in den abhängigen Ansprüchen beschrieben.

Weiterhin betrifft die vorliegende Erfindung ein Verfahren zur Messung von Beschleunigungen eines relativ zur Messvorrichtung beschleunigten Elementes unter Verwendung einer Vorrichtung, wie sie oben beschrieben ist. Vorteilhafter Weise werden dabei zur Mittelung aller möglichen auftretenden Störsignale, die auf die Inhomogenitäten bzw. Oberflächenungenauigkeiten zurückzuführen sind, zwei oder mehr Messvorrichtungen am Umfang verteilt angebracht. Die elektrischen Signale werden durch Reihenschaltung der Ausgänge summiert. Um Spannungssignale der umlaufenden Exzentrizität im Summensignal zu minimieren, sollten alle verwendeten Messvorrichtungen gleichmässig am Rotorumfang verteilt sein. Bei der Verwendung von 2 Aufnehmern sind diese also auf entgegengesetzten Seiten des Schaftes anzubringen (= 180 Grad Versatz), bei drei Aufnehmern mit 120 Grad Versatz usw..

Weitere bevorzugte Ausführungsformen des erfindungsgemässen Verfahrens bzw. der erfindungsgemässen Verwendung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine Aufsicht auf eine Abwicklung eines Rotors mit einseitiger Messanordnung und Lücken im Erregerfeld;
- Fig. 2: eine Aufsicht auf eine Abwicklung eines Rotors mit zweiseitiger Messanordnung ohne Lücken im Erregerfeld;
- Fig. 3: eine perspektivische Ansicht einer erfindungsgemässen Messanordnung;
- Fig. 4: Radialinduktion in Abhängigkeit der tangentialen Komponente; und
- Fig. 5: einen Schnitt durch einen optimierten Blechkörper senkrecht zu z, a) Erregerfeld, b) Messfluss.

### WEGE ZUR AUSFÜHRUNG DER ERFINDUNG

Bei allen auf dem Ferraris-Prinzip beruhenden Sensoren müssen Joche zur Führung des Erregerflusses und zur Führung des Messflusses bereitgestellt werden. Meist benutzen beide Flüsse zumindest teilweise das gleiche Eisenmaterial als Rückschluss. Insbesondere der einseitige Aufnehmer, bei dem sich sowohl die Erregermagnete als auch die Messspule auf einer Seite des Mediums (elektrisch leitfähige Glocke, Scheibe oder Massivrotor) befinden, ist konstruktiv problematisch. Dies soll im folgenden näher erläutert werden:

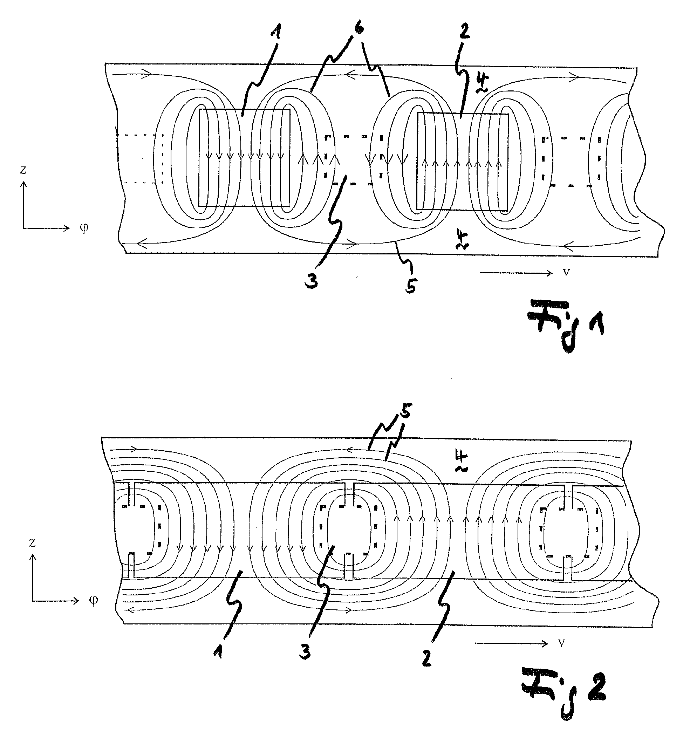

Die Tatsache, dass die lückenlose Felderregung eine kleinere Streuung aufweist und somit zu höheren Empfindlichkeiten führt, lässt sich anhand der Figuren 1 und 2 verstehen. Fig. 1 zeigt eine Anordnung (in abgewickelter Darstellung) mit Lücken in der Felderregung. Die als Permanentmagnete ausgebildeten Erregermagnete 1 und 2 sind mit unterschiedlicher Richtung über einem als Schaft ausgebildeten, elektrisch leitenden Element 4 angeordnet. Die Koordinate z verläuft dabei parallel zur Achse des Schaftes und die Koordinate Φ definiert die Umfangsrichtung bzw. eine tangentiale Richtung. Der Pfeil v illustriert dabei die Geschwindigkeitsrichtung des beweglichen, elektrisch leitenden Elementes 4. Zwischen den unterschiedlich orientierten Permanentmagneten (Nord-/Südpol) ist der Messzahn 3 und damit dessen Fläche angedeutet. Durch die im beweglichen Element 4 induzierten Spannungen unter den Erregermagneten 1, 2 (Erregerpolen) entstehen Wirbelströme, deren Verlauf mit Feldlinien 5, 6 gekennzeichnet ist. Während die Feldlinien (Stromwirbel) 5 die Fläche des Messzahns 3 umschliessen und damit auch eine Erregung zum Messfluss bereitstellen, schliessen sich die Feldlinien (Stromwirbel) 6 auf dem kürzesten Weg direkt an den Kanten der Erregermagnete 1, 2. Diese Wirbelströme leisten keinerlei Beitrag zum Messfluss, produzieren jedoch Wärme im Element 4 und auch ein Bremsmoment.

Fig. 2 zeigt eine Anordnung mit lückenloser Felderregung. Sämtliche Feldlinien (Wirbelströme) 5 verlaufen bei einer derartigen Felderregung um die Fläche der Messzähne 3 herum und leisten damit deren Beitrag zur Erregung des Messflusses. Der Aufnehmer arbeitet damit hoch effizient und mit grosser Sensorempfindlichkeit.

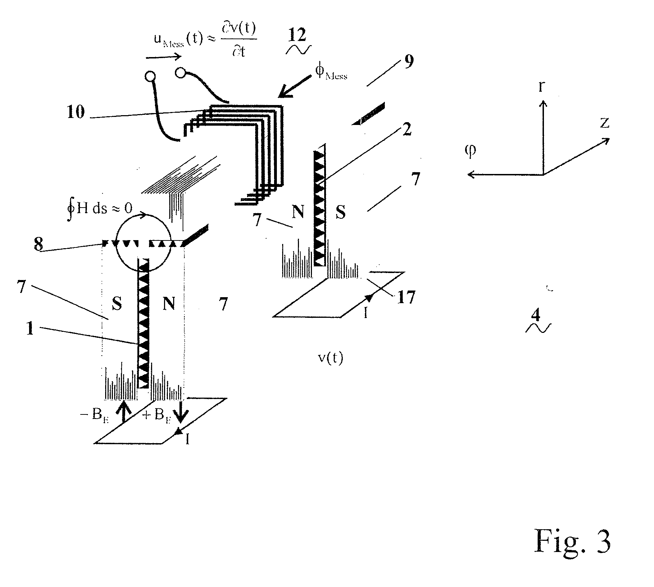

Die lückenfreie Felderregung, wie in Fig. 2 gezeigt, ist für eine einseitige Messanordnung konstruktiv höchst problematisch, weil einerseits der Mess- und Erregerfluss am Ort des Mediums überlappend sein soll, andererseits die Flussanteile mittels magnetischer Kreise getrennt werden müssen, um sie einem Erregermagnet bzw. einer Messspule zuzuführen. Diese Problematik ist auch in Publikationen angedeutet (vgl. z.B. L. Wilhelmy, R. Domke: Drehbeschleunigungssensor ermöglicht hochgenaue Drehzahlregelung. Antriebstechnik 38 (1999), Nr. 4, S. 122). Bei der Messung an der Welle (bzw. Flansch) von grossen Turbogenerator-Rotoren ist das Reaktionsteil ein Vollzylinder, eine zweiseitige Bauform ist hier nicht möglich. Um trotzdem eine möglichst kleine Streuung zu erreichen, wurde der Sensor nach Fig. 3 entworfen.

Prinzipiell besteht der Magnetkreis des Messflusses Φ_{Mess} aus einem geblechten U-Kern. Der U-Kern besteht aus den beiden unterschiedlich angeordneten Erregermagneten 1 und 2, um welche jeweils beidseitig Blechpakete 7 angeordnet sind. Diese beiden " Erregereinrichtungen " werden durch ein als oberes Blechpaket ausgebildetes Joch 9 verbunden. Die Bleche sind dabei jeweils senkrecht zur Umfangsrichtung Φ des Stators angeordnet. Auf dem oberen Blechpaket sitzt die als Formspule ausgeführte Messspule 10. Die beiden Schenkel des U-Kernes, welche die Erregereinrichtungen darstellen, sind in tangentialer Richtung zweigeteilt; dazwischen sind Permanentmagnete zu finden, die in tangentialer Richtung magnetisiert sind. Sie treiben ein Erregermagnetfeld B_{E}, d.h. einen Erregerfluss, der unter einem Ende des U-Kernes 12 zwei Pole hervorbringt und der sich unter der Rotor-Oberfläche schliesst. Die in der Rotor-Oberfläche fliessenden Wirbelströme I erregen den Messfluss Φ_{Mess}, der sich von einem Ende des U-Kernes über den Rücken des Jochs 9 hin zum anderen Ende und über das Element 4 in axialer Richtung schliesst. Hierfür ist es notwendig, dass die Polarisierung des Erregerfeldes an beiden U-Kern-Enden unterschiedlich ist. Die unterschiedliche Polarisierung an den beiden U-Kern-Enden macht "Kompensationsmagnete" 8 notwendig, die einen magnetischen Kurzschluss der Erregermagnete verhindern. Dazu sind die Kompensationsmagnete 8 zwischen Joch 9 und Erregermagneten 1, 2 bzw. Blechpaketen 7 angeordnet. Sie stellen eine magnetische Spannung bereit, die entgegengesetzt zu derjenigen der Erregermagnete wirkt und diese bei richtiger Auslegung kompensieren kann.

Bei dem Entwurf des magnetischen Kreises, der Messspule und der Vorgabe des Abstandes zwischen Ferraris-Stator und Rotor-Oberfläche sind einige Punkte zu beachten, die bei Nichtbeachtung nur zu sehr unbefriedigenden Ergebnissen führen können.

### Auslegung des magnetischen Kreises:

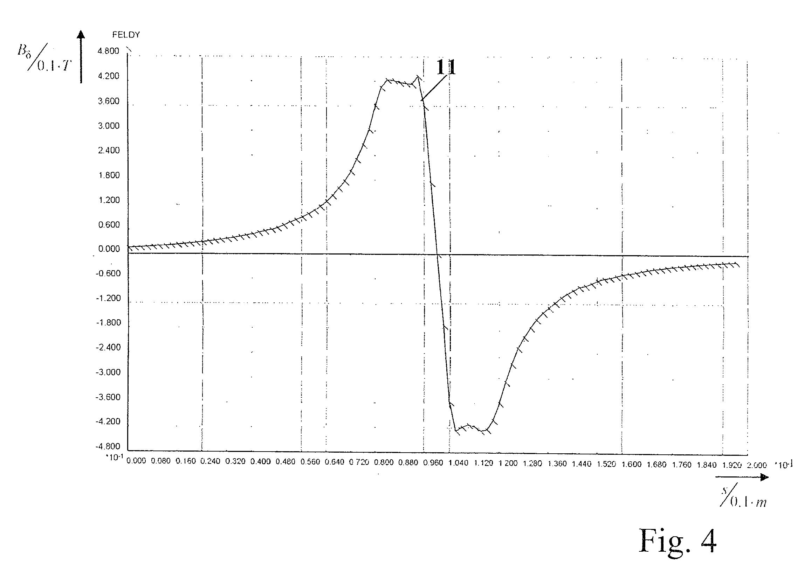

Bei der Auslegung des magnetischen Erregerkreises sollte darauf geachtet werden, dass der Ort des maximalen Luftspaltfeldes unter den geblechten Enden des U-Kernes liegt. Das Maximum des Feldes soll möglichst über die ganze Breite der beiden Polenden verteilt sein. Fig. 4 zeigt eine optimierte Feldkurve mit breiten flachen Maxima und einer möglichst steilen Stufe zwischen den beiden Polarisationsrichtungen. Typischerweise erhält man bei der Verwendung von Neodym-Permanentmagneten eine Radialinduktion mit einem Maximum im Bereich von 0.4 bis 0.5 Tesla. Das Maximum weist eine Breite von jeweils ca. 0.8 bis 1.5 cm auf.

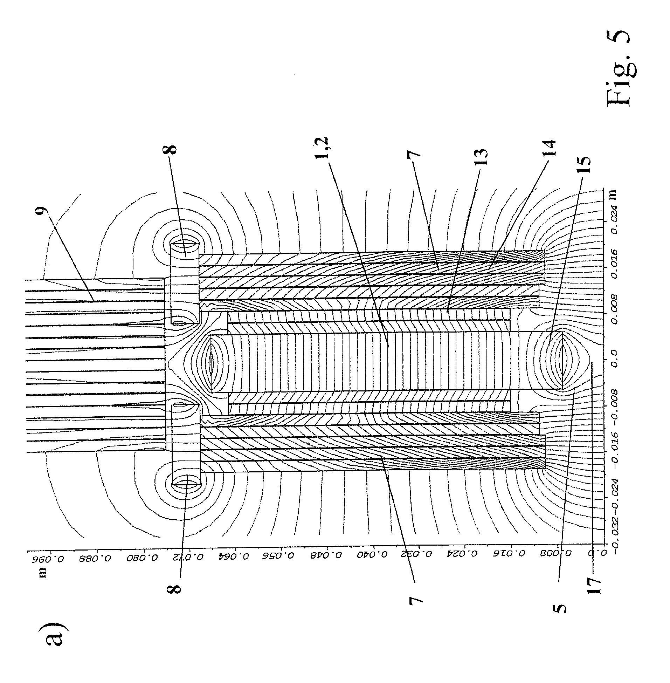

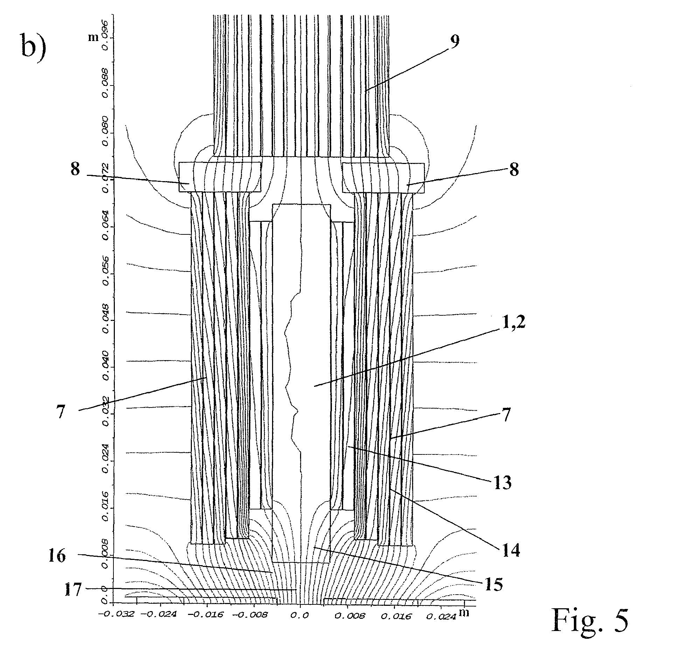

Fig. 5 zeigt das zugehörige Feld bzw. den optimierten Blechkörper in einem Schnitt durch eines der beiden U-Enden. Dabei ist die Stufung der Blechpakete 7 in Richtung zum Luftspalt 17 erkennbar. Dazu sind nahe an den Erregermagneten 1, 2 angeordnete Blechlagen 13 am weitesten zurückgenommen, während weiter aussen angeordnete Blechlagen 14 in gestufter Weise sukzessive weiter in den Luftspalt 17 hineinragen. Das möglichst flache Maximum der Felderregung wird u.a. durch diese spezifische Stufung ermöglicht. Auch im Bereich der Kompensationsmagnete 8 sind die Blechpakete 7 gestuft ausgebildet, was zu einer erhöhten Empfindlichkeit der Messung beiträgt. Bei Nichtbeachtung kann sich ein Teil des Messflusses schon gleich an den Enden des U-Kernes 12 schliessen und führt somit zu einer Verringerung der Sensor-Empfindlichkeit. Weil die Optimierung des Blechkörpers nur für einen Soll-Abstand zwischen Ferraris-Stator und Element (Rotoroberfläche) 4 durchführbar ist, ist dieser Abstand des Sensors bei jeder Messung einzuhalten (Auslegungskriterium). Die Abhängigkeit der Empfindlichkeit vom Sensorabstand ist gross.

Die Kompensationsmagnete 8 wirken auf den sie durchdringenden Messfluss Φ_{Mess} magnetisch wie eine Luftstrecke. Des weiteren sind bei leitfähigem Magnetmaterial auch Wirbelströme möglich. Dies führt zu einem Tiefpassverhalten des Aufnehmers. Die Höhe der Kompensationsmagnete 8 (in Richtung r gem. Figur 3) ist deshalb möglichst klein zu wählen. Bei gleichem Erregermagnetfeld B_{E}, d.h. bei einem Erregerfluss am Luftspalt ist dies möglich, wenn die Erregermagnete 1, 2 in tangentialer Richtung kleine und in radialer Richtung grosse Ausmasse haben (Flusssammler).

Des weiteren ist zu beachten, dass der Messfluss auch in axialer Richtung durch den Rotor tritt. Hier kommt es ebenfalls zur Wirbelstrombildung, welche die Grenzfrequenz des Tiefpass-Amplitudenganges herabsetzt. Deswegen sollte die axiale Ausdehnung des U-Kernes 12 möglichst klein gewählt werden. Typischerweise reicht eine Ausdehnung von 2 bis 4 cm bei jedem U-Ende. In Umfangsrichtung φ verfügt ein U-Ende typischerweise über eine Breite von ca. 4 cm. Der Luftspalt 17 beträgt z.B. 0.8 mm und die Höhe (in Richtung r in Fig. 3) eines U-Armes ca. 5 bis 7 cm, und die Höhe des oberen Blechpakets ca. 1.5 cm.

Wie einleitend schon erwähnt wurde, wird die Messspule 10 an einen Spannungsverstärker mit sehr grossem Eingangswiderstand angeschlossen. Dadurch wird verhindert, dass ein Wechselstrom in der Spule fliesst, der wegen der Selbstinduktivität stark frequenzabhängig wäre. Trotzdem kann es in Teilen der Messspule 10 zu Strömen kommen, die sich über parasitäre Kapazitäten schliessen. Diese Teilkapazitäten bilden mit Teilen der Spule elektrische Schwingkreise, die den Sensor in bestimmten Frequenzbereichen untauglich machen. Bei der Auslegung ist daher auf sehr kleine Längs- und Querkapazitäten zu achten (hohe Eigenfrequenzen), d.h. die erste und letzte Windung der Messspule sollte weit auseinander angeordnet sein und der Abstand zum U-Kern sollte möglichst gross sein. Wenn genug Platz vorhanden ist, wäre eine Scheibenwicklung, wie man sie vom Transformatorbau her kennt, zu empfehlen. Dies käme auch einem axial kurzen U-Kern entgegen.

Die Oberfläche des Rotors sollte möglichst glatt und ohne Riefen sein. Insbesondere sind Kerben in axialer Richtung unter Umständen von fataler Wirkung, denn sie bedeuten eine zeitliche Variation des elektrischen und magnetischen Leitwertes und können zu Störsignalen führen, die alle höheren Harmonischen der Drehzahlfrequenz enthalten.

Im Gegensatz zu herkömmlichen Ferraris-Sensoren ist hier das Reaktionsteil magnetisch, d.h. bei umlaufender Exzentrizität schwankt zeitlich die Luftspaltweite und führt so zu einem drehzahlfrequenten Störsignal. Dieser Effekt ist nie ganz zu vermeiden, kann jedoch durch eine grosse Luftspaltweite relativ zur Exzentrizität und/oder durch zwei diametral zueinander angebrachte Sensoren, in deren Summensignal sich das Störsignal kompensiert, recht klein gehalten werden.

Im Gegensatz zur Anordnung gem. der eingangs erwähnten WO 02/12904, bei welcher die Permanentmagnete in ihrer Magnetisierungsrichtung dem Luftspalt zugewandt sind, ist die Magnetisierungsrichtung hier in Geschwindigkeitsrichtung v wirksam. Die Anordnung gem. WO 02/12904 hat keinen "Flusssammler"-Effekt, d.h. eine hohe Luftspaltinduktion ist mit einer derartigen Anordnung im Gegensatz zur vorliegenden Erfindung nicht zu erreichen.

Bei allen lückenlosen Erregungen besteht grundsätzlich das Problem, die Magnetkreise des Erregerflusses und des Messflusses einerseits "überlappend" zu gestalten, andererseits dafür zu sorgen, dass die Flüsse voneinander getrennt sind. Ein Dauermagnet, der in einer Nut liegt (siehe Fig.1 der WO 02/12904), weist einen sehr starken Streufluss auf (Streufluss = der Flussanteil, der nicht über den Luftspalt geht und das Medium nicht durchsetzt). Durch Nuten entstehen automatisch Magnetfeldwirbel, die sich über die Nutflanken schliessen können und nicht nur das Magnetmaterial in unnötiger Weise sättigen, sondern auch einen Teil des Nutzflusses "absaugen", was sich eben im Fall der WO 02/12904 negativ auswirkt. Auch im Falle der aufliegenden Dauermagnete ist der Streufluss erheblich, denn seine Ausdehnung in Richtung der Medium-Geschwindigkeit ist relativ zur Luftspaltweite klein.

Anders ist es bei der vorliegenden Erfindung: Die Pole lassen sich unabhängig von der Geometrie der Dauermagnete so gestalten, dass ihre Ausdehnungen relativ zur Luftspaltweite gross sind, und somit die breiten Pole ihren Fluss grösstententeils durch das Medium schicken. Der Streuanteil ist entsprechend klein. Ausserdem bleibt durch die Kompensationsmagnete 8 die magnetische Feldstärke H der Erregermagnete 1, 2 für den Rücken des Jochs 9 ohne Wirkung. Sie "isolieren" sozusagen die beiden Kreise voneinander. Der Rücken des Jochs 9 kann deshalb aus my-Metallblechen aufgebaut werden.

Wie bereits erwähnt, haben sich bisher die Teilkapazitäten zwischen den einzelnen Messwindungen und zwischen den Messwindungen und dem geerdeten oder nicht geerdeten Eisenmaterial als problematisch erwiesen. In den meisten Varianten des Standes der Technik ist die Messwicklung äusserst konzentriert ausgeführt, was zwar einerseits den Vorteil des kurzen magnetischen Weges mit sich bringt, aber auch erhebliche Probleme bei der Eigenschwingungsfähigkeit. Grössere Abmessungen der Messwicklungen, insbesondere Freiräume zum Eisen, wären hier problematisch, weil sie in den Luftspalt ragen würden. Die vorliegende Erfindung lässt die Länge des Rückens des Jochs 9 variabel und auch die Höhe der U-Schenkel ist nicht festgelegt. Dies schafft Spielraum für eine kapazitätsarme Auslegung.

Die oben erwähnte Problematik, dass axial gerichtete Riefen oder Inhomogenitäten zu starken Störsignalen führen ist bei den Vorrichtungen nach dem Stand der Technik sehr viel stärker ausgeprägt als bei der vorliegenden Erfindung, weil die an der Oberfläche angeordneten Magnete nach dem Stand der Technik sehr viel lokaler wirken (hohe Feldkonzentration). Die Optimierung der U-Schenkel (vgl. Figuren 4 und 5) macht ein sehr breites Induktionsmaximum möglich, das die Wirkung einer hierzu vergleichsweise kleinen Riefe sehr klein macht und ausserdem die Wirbelstromverluste und den Bremseffekt minimiert (Verluste sind proportional der Stromdichte im Quadrat).

Der Aufbau mit Flusssammler-Erregung hat weiterhin den Vorteil, dass man die Anordnung auch bei relativ grossen Luftspalten verwenden kann. Nachteilige Störeffekte wie umlaufende Exzentrizität des Reaktionsteiles können so klein gehalten werden.

### Zusammenfassend kann festgestellt werden:

Die vorgeschlagene U-Anordnung macht durch die Flusssammler-Geometrie einen sehr starken und zugleich breitflächigen Erregerfluss bei relativ grossem Luftspalt möglich, wodurch Schmutzeffekte (Oberflächenbeschädigungen, Asymmetrien, Rundlaufprobleme) klein gehalten werden können. Durch die U-Form des Magnetkreises ist Freiraum geschaffen für (1) die "Flusssammler"-Magnetanordnung, (2) für eine kapazitätsarme Messspule (mit Freiraum zum Eisen). Wegen letzterer sind die Eigenfrequenzen relativ hoch gegenüber den Messfrequenzen.

In der vorliegenden Beschreibung wird eine alternative Messmethode vorgeschlagen: Die Drehschwingungsmessung mit einem einseitig angeordneten Ferraris-Sensor. Im Vergleich zur konventionellen Messmethode entstehen zusammenfassend folgende Vorteile:
- Es sind keine speziellen Sensor-Halterungen zu entwerfen bzw. zu montieren.
- Die Messung ist an allen Rotor-Positionen möglich, die eine glatte Eisenoberfläche bieten (z.B. Welle, Flansche etc.).
- Universell für alle Rotoren verwendbar (Sensorempfindlichkeit hängt nur in geringem Mass vom Durchmesser des Rotors ab).
- Sehr einfache Handhabung, sehr schnell vom Bedienpersonal erlernbar. Lediglich der Ferraris-Stator ist in einem Nennabstand vom rotierenden Teil zu montieren (Achtung: Zugkräfte).

### BEZUGSZEICHENLISTE

- 1: Erregermagnet, Permanentmagnet
- 2: Erregermagnet, umgekehrte Polarisierung zu 1
- 3: Messzahn
- 4: elektrisch leitendes Element
- 5: Feldlinie des Erregerfeldes
- 6: frühzeitig geschlossene Feldlinie des Erregerfeldes
- 7: Blechpaket um Erregermagnet
- 8: Kompensationsmagnet (Permanentmagnet)
- 9: Joch, oberes Blechpaket
- 10: Messspule
- 11: Radialinduktion an einem U-Kernende
- 12: U-Kern
- 13: innere Blechlage von 7
- 14: äussere Blechlage von 7
- 15: schaftzugewandte Spitze von 1 und 2
- 16: Feldlinie des Messflusses
- 17: Luftspalt

- N, S: Polarisation des Permanentmagnetes (Nord, Süd)
- v: Geschwindigkeitsrichtung des elektrisch leitenden beweglichen Elements
- Φ: Umfangsrichtung des Stators
- z: Koordinate senkrecht zu v und parallel zur Ebene
- r: Koordinate in radialer Richtung
- B_{E}: Erregermagnetfeld
- I: Induzierter Wirbelstrom in 4
- Φ_{Mess}: Messfluss

## Patentansprüche

1. Vorrichtung zur Messung von Beschleunigungen, bei welcher in Folge eines mit wenigstens zwei Erregermagneten (1, 2) erzeugten Erregerfeldes (5, 6, B_{E}) in einem relativ zur Vorrichtung beschleunigten, elektrisch leitenden Element (4) über einen Luftspalt (17) Wirbelströme (I) induziert werden, und durch diese Wirbelströme induzierter Messfluss (16, Φ_{Mess}) über die **dadurch** in wenigstens einer Messspule (10) induzierte Spannung (U_{Mess}) erfasst wird, wobei sowohl die Erregermagnete (1, 2) als auch die Messspule (10) ausschliesslich auf einer Seite des elektrisch leitenden Elements (4) angeordnet sind **dadurch gekennzeichnet, dass** die Nord-Süd Richtung der Erregermagnete (1, 2) jeweils im wesentlichen parallel zur Oberfläche des elektrisch leitenden Elementes (4) angeordnet ist.

2. Vorrichtung nach Anspruch 1, **dadurch gekennzeichnet, dass** die Erregermagnete (1, 2) als Permanentmagnete ausgebildet sind.

3. Vorrichtungen nach einem der vorhergehenden Ansprüche, **dadurch gekennzeichnet, dass** 2 derartige Erregermagnete (1, 2) angeordnet sind, die mit entgegengesetzter magnetischer Polung über ein Joch (9) in axialer Richtung (z) verbunden sind, wobei bevorzugt die Erregermagnete (1, 2) und/oder das Joch (9) als Blechpaket ausgebildet ist, dessen Bleche insbesondere in der Radial-Axial-Ebene (r, z) bezüglich des beschleunigten, elektrisch leitenden Elementes (4), insbesondere in Form einer drehenden Welle, angeordnet sind.

4. Vorrichtung nach einem der vorhergehenden Ansprüche, **dadurch gekennzeichnet, dass** zwei Erregermagnete (1, 2) mit ihrer Nord-Süd Richtung im wesentlichen tangential (ϕ) zum beschleunigten, elektrisch leitenden Element (4) angeordnet sind, wobei die Erregermagnete (1, 2) in radialer Richtung (r) zum beschleunigten, elektrisch leitenden Element (4) parallel geschaltet sind, und wobei die Nord-Süd Richtungen entgegengesetzt ausgerichtet sind.

5. Vorrichtung nach Anspruch 4, **dadurch gekennzeichnet, dass** die Erregermagnete (1, 2) jeweils nord- oder südseitig an ein Blechpaket (7) grenzen.

6. Vorrichtung nach Anspruch 5, **dadurch gekennzeichnet, dass** die Erregermagnete (1, 2) auf der dem beschleunigten, elektrisch leitenden Element (4) zugewandten Seite in den Luftspalt (17) über das Blechpaket (7) hinausragend ausgebildet sind, wobei bevorzugt nahe an den Erregermagneten (1, 2) angeordnete Blechlagen am weitesten zurückgenommen sind und nach aussen in gestufter Weise sukzessive weiter in den Luftspalt (17) hineinragen.

7. Vorrichtung nach einem der Ansprüche 4 bis 6, **dadurch gekennzeichnet, dass** die zwei Erregermagnete (1, 2) auf ihrer dem Element (4) abgewandten Seite über ein zur Führung des Messflusses (Φ_{Mess}) geeignet ausgebildetes Joch (9) verbunden sind, und dass die Messspule (10) um das Joch (9) herum angeordnet ist.

8. Vorrichtung nach Anspruch 7, **dadurch gekennzeichnet, dass** das Joch (9) als Blechpaket ausgebildet ist.

9. Vorrichtung nach Anspruch 8 und einem der Ansprüche 6 oder 7, **dadurch gekennzeichnet, dass** zwischen Joch (9) und Erregermagneten (1, 2) bzw. Blechpaketen (7) Kompensationsmagnete (8) angeordnet sind, welche einen magnetischen Kurzschluss der Erregermagnete (1, 2) verhindern.

10. Vorrichtung nach Anspruch 9, **dadurch gekennzeichnet, dass** die Kompensationsmagnete (8) mit ihrer Nord-Süd Richtung im wesentlichen senkrecht zum beschleunigten, elektrisch leitenden Element (4) und zwischen den Blechpaketen (7) und dem Joch (9) angeordnet sind.

11. Vorrichtung nach Anspruch 10, **dadurch gekennzeichnet, dass** bei Anwesenheit von zwei Erregermagneten (1, 2) vier Kompensationsmagnete (8) vorhanden sind.

12. Vorrichtung nach einem der Ansprüche 10 oder 11, **dadurch gekennzeichnet, dass** die erste und die letzte Windung der Messspule (10) weit auseinander angeordnet sind und der Abstand zum U-Kern (12) möglichst gross ist.

13. Vorrichtung nach einem der vorhergehenden Ansprüche, **dadurch gekennzeichnet, dass** die Erregermagnete (1, 2) in tangentialer Richtung, im wesentlichen parallel zur Ebene des beschleunigten, elektrisch leitenden Elementes (4), kleine Ausmasse und in Richtung senkrecht zur Ebene des beschleunigten, elektrisch leitenden Elementes (4) grosse Ausmasse haben.

14. Vorrichtung nach einem der vorhergehenden Ansprüche, **dadurch gekennzeichnet, dass** es sich beim beschleunigten, elektrisch leitenden Element (4) um den Schaft oder eine Welle einer rotierenden Vorrichtung handelt, insbesondere um den Schaft eines Generators oder einer Turbine.

15. Verfahren zur Messung von Beschleunigungen eines relativ zur Messvorrichtung beschleunigten, elektrisch leitenden Elementes (4) unter Verwendung einer Vorrichtung gemäss einem der Ansprüche 1 bis 14.

16. Verfahren nach Anspruch 15 unter Verwendung zweier oder mehrerer Vorrichtungen nach Anspruch 14, **dadurch gekennzeichnet, dass** die Vorrichtungen äquidistant am Rotorumfang verteilt sind.
